(19) Europäisches Patentamt
European Patent Office
Office européen des brevets

(11) **EP 3 387 910 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **17166150.7**

(22) Anmeldetag: **12.04.2017**

(51) Internationale Patentklassifikation (IPC):
*A23G 1/50* (2006.01)    *A23G 1/18* (2006.01)
*A23G 1/00* (2006.01)    *A23G 1/04* (2006.01)
*A23G 1/10* (2006.01)    *A23G 1/40* (2006.01)
*A23P 10/22* (2016.01)    *A23G 3/02* (2006.01)

(52) Gemeinsame Patentklassifikation (CPC):
**A23G 1/40; A23G 1/0013; A23G 1/0016; A23G 1/0026; A23G 1/0046; A23G 1/10; A23G 1/18; A23G 3/0226;** A23G 1/50

(54) **VERFAHREN UND VORRICHTUNG ZUR HERSTELLUNG UND/ODER VERARBEITUNG VON LEBENSMITTELPRODUKTEN**

METHOD AND DEVICE FOR PRODUCING AND/OR PROCESSING OF FOOD PRODUCTS

PROCÉDÉ ET DISPOSITIF DE FABRICATION ET/OU DE TRAITEMENT DE PRODUITS ALIMENTAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.10.2018 Patentblatt 2018/42**

(73) Patentinhaber: **Bühler AG**
**9240 Uzwil (CH)**

(72) Erfinder:
• **Strähl, Patrick**
**8057 Zürich (CH)**

• **Höhener, Manuel**
**9240 Uzwil (CH)**
• **Paggios, Konstantinos**
**8280 Kreuzlingen (CH)**

(74) Vertreter: **Hepp Wenger Ryffel AG**
**Friedtalweg 5**
**9500 Wil (CH)**

(56) Entgegenhaltungen:
**WO-A1-2011/007379**    **GB-A- 1 219 996**
**US-A- 4 861 615**    **US-A1- 2016 242 432**

**Beschreibung**

Die Erfindung betrifft ein Verfahren und eine Vorrichtung zur Herstellung und/oder Verarbeitung von Lebensmittelprodukten, sowie die Verwendung von Partikeln zur Änderung der Fliesseigenschaften von fliessfähiger Lebensmittelmasse.

Zur Herstellung von konventionellen Schokoladenprodukten oder Compound-Massen werden Teilchen, typischerweise bestehend aus kristallinem Zucker, Kakaobestandteilen und/oder Trockenmilchbestandteilen, in flüssiger Fettmasse, insbesondere in Kakaobutter, suspendiert.

Bei der Herstellung eines konventionellen Schokoladen- oder Compoundprodukts muss die Schokoladen- oder Compoundmasse zur Erreichung hoher sensorischer Qualität zwischen Walzen zerkleinert und/oder conchiert werden, wobei in Folge der Zerkleinerung kantige Teilchen entstehen. Dabei werden die suspendierten Teilchen desagglomeriert, fein verteilt und hinsichtlich eines Teils ihrer zur Aromabildung beitragenden Inhaltskomponenten auch physikalisch und/oder chemisch verändert. Diese Vorgänge, insbesondere das Conchieren, aber auch das Feinwalzen, sind höchst zeit- und energieaufwändig oder benötigen gut geschultes Personal, um die geeigneten Bearbeitungsparameter festzulegen. Das gilt ebenso, wenn die Bearbeitung in einem Kugelmühlenprozess stattfindet, der alternativ oder zusätzlich zum Einsatz kommen kann.

Anschliessend wird die Masse in einem Temperiervorgang unter Kühlung vorkristallisiert. Die Masse kann dann in Formen gegossen werden und wird schliesslich unter Kühlung endverfestigt, insbesondere kristallisiert die Fettmatrix.

Im Rahmen der vorliegenden Anmeldung werden unter Zuckern süssende Komponenten verstanden, insbesondere Saccharide, also Mono-, Di- und Oligosaccharide, insbesondere mit einem Dextroseäquivalent (DE) von grösser als 20, Zuckeralkohole, Zuckeraustauschstoffe und Süssstoffe, sowie Kombinationen dieser. Das DE wird hierbei gemäss der Lane-Eynon-Methode bestimmt, die beispielsweise in "Zucker und Zuckerwaren" beschrieben ist (siehe Hoffmann/Mauch/Untze, 2. Aufl. 2002, ISBN 3-86022-937-0, S.234-235).

Aus WO2015049292 sind sphärische Partikel zur Herstellung eines Lebensmittelprodukts bekannt, wobei ein solches sphärisches Partikel ein Matrixmaterial aus amorph verfestigtem Biopolymer enthält.

Weiterhin ist es bekannt, derartige Partikel und Agglomerate solcher Partikel in einem Tropfenbildungsprozess, zum Beispiel in einem Sprühprozess mit Ein- oder Mehrstoffdüsen in einem Sprühtrockner herzustellen.

Dabei wird eine feststoffhaltige Flüssigkeit, die in ihrer Zusammensetzung an das gewünschte Endprodukt angepasst ist, über ein Düsensystem oder einen Rotationszerstäuber in den Raum eines Trockners versprüht. Im Gegen- oder Gleichstrom zu den entstehenden Tropfen wird heisse Luft geführt. Die Flüssigkeit verdampft und aus jedem Tropfen entsteht ein Pulverpartikel. Die so hergestellten Produkte werden in der Sprühkammer gesammelt oder zum Beispiel über einen Zyklon aus der Trockenluft in einen Sammelbehälter geführt. Die aufeinander fallenden Pulverpartikel agglomerieren in der Regel und bilden ein Granulat.

Aus WO2015049292 ist ebenfalls bekannt, dass für sphärische Partikel, die in einer bevorzugt fettkontinuierlichen Fluidphase dispergiert vorliegen, die rheologischen Eigenschaften, zum Beispiel beschrieben über die Viskositätsfunktion $\eta(\gamma)$ und die Fliessgrenze $\tau_0$, deutlich reduzierte Werte dieser Materialfunktionen aufzeigen gegenüber Suspensionen gleicher Zusammensetzung, in welchen die in den sphärischen Partikeln enthaltenen Komponenten in kantiger, also nicht sphärischer Partikelform, und separat, jedoch mit gleicher oder zumindest vergleichbarer Partikelgrössenverteilung, vorliegen.

Niedrige Viskositäten sind bei der Verarbeitung einer Lebensmittelmasse vorteilhaft, da die Masse mit geringerem Energieaufwand durch eine Giessmaschine geführt werden kann und die Komponenten der Maschine leichter zu reinigen sind.

Auch für konventionell hergestellte Lebensmittelmassen, die zu einer Textur und einem Geschmack des Endprodukts von bekannt guter Qualität führen, ist eine niedrige Viskosität wünschenswert. Dies kann bislang nur unter erheblichem Aufwand erreicht werden.

Aus der EP1031285 ist eine Schokoladenmasse bekannt, die Hydrokolloide enthält. Diese quellen bei einem Kontakt mit Wasser und können zu einer Erhöhung der Viskosität des Produkts während des Verzehrs führen.

Die US2010/0323067 offenbart eine Schokoladenzusammensetzung, welche Süssungsmittel in Form von Nanoteilchen mit einer Grösse zwischen 50 und 1000 nm enthält. Die rheologischen Eigenschaftfen einer Schokoladenzusammensetzung, die Emulgator enthält, sind abhängig vom Anteil der Nanoteilchen in der Zusammensetzung.

US2006/0121164 zeigt ein Schokoladenprodukt, bei welchem Kakaobestandteile, wie Kakaobutter, in Wasser oder Milch dispergiert sind. Die kakaobasierte Öl-in-Wasser-Suspension bildet ein Gelnetzwerk, dessen rheologische Eigenschaften vom Anteil der Kakaobestandteile abhängen. Auf diese Weise können stabile und kalorienarme Öl-in-Wasser-Suspensionen, zum Beispiel Fruchtpuddings oder Trinkschokoladen gebildet werden.

US 2016/0242432 A1 betrifft sphärische Partikel, Verfahren zum Herstellen von Lebensmittelsuspensionen und Verzehrmassen mit sphärischen Partikeln. Die Partikel enthalten ein Matrixmaterial aus einem amorph verfestigten Zucker, wobei Milch oder ein Milchbestandteil, insbesondere ein Milchfett oder Anteile von Milchfetten, in das Matrixmaterial eingebettet ist.

US 4,861,615 A offenbart einen Extruder zur Herstellung einer Schokoladenmasse. In einer ersten Zone wird Zucker in Form von Kristallen hinzugefügt. In einer zweiten Zone wird die Viskosität gemessen. Je nach ermittelter Viskosität kann die Zugabe von Kakaobutter reguliert werden.

WO 2011/007379 A1 zeigt ein Verfahren zur Herstellung von Schokolade, wobei der Schokolade kleinste Zuckerpartikel zugefügt werden. Mindestens 90% der Partikel haben einen Durchmesser zwischen 25 und 40pm.

GB 1 219 996 A offenbart eine hitzeresistente Schokoladenmasse, die Anteile von kristallinem und feingemahlenem amorphen Zucker aufweist.

Es besteht daher die Aufgabe, Verfahren und Vorrichtungen zur Verfügung zu stellen, welche die Nachteile des bekannten überwinden und welche insbesondere einen praktikablen Herstellungs- und Verarbeitungsprozess einer Lebensmittelmasse erlauben.

Die der Erfindung zugrunde liegende Aufgabe wird gelöst durch ein Verfahren zur Herstellung und/oder Verarbeitung von Lebensmittelprodukten umfassend den Schritt der Veränderung des Fliessverhaltens, insbesondere der Viskosität, einer Giessmasse in einer Vorrichtung zur Herstellung und/oder Verarbeitung von Lebensmittelprodukten. Die Vorrichtung weist bevorzugt mindestens einem Massebehälter für eine Giessmasse, bevorzugt auf Fettbasis, auf.

Das Fliessverhalten wird eingestellt und/oder verändert, indem der Anteil von Partikeln, von denen mindestens 90Vol.% einen Durchmesser unter 500pm aufweisen und insbesondere 90Vol.% einen Durchmesser grösser $1\mu m$, am gesamten Feststoffanteil der Giessmasse erhöht wird und/oder Partikel, von denen mindestens 90Vol.% einen Durchmesser unter 500pm aufweisen und insbesondere 90Vol.% einen Durchmesser grösser $1\mu m$, der Giessmasse zudosiert werden.

Bei einer Giessmasse handelt es sich im Rahmen dieser Erfindung um eine fliessfähige Masse, bevorzugt um eine Lebensmittelmasse auf Fettbasis, insbesondere um eine Fettmasse, zum Beispiel eine Schokoladenmasse. Es kann sich aber auch um eine wasserbasierte Lebensmittelmasse handeln, zum Beispiel eine Eismasse oder Zuckerfondant.

Insbesondere wird ein vorgegebener Wert für eine Viskosität und/oder eine Fliessgrenze eingestellt. Die Viskosität wird bevorzugt verringert und/oder es wird die Fliessgrenze der Giessmasse verringert. Die Verringerung bezieht sich insbesondere auf einen Vergleichswert, zum Beispiel die Viskosität und/oder die Fliessgrenze der Ausgangsgiessmasse oder einer Giessmasse mit entsprechender Rezeptur, welche den Feststoffanteil in herkömmlicher Art und Weise aufweist.

Die Giessmasse kann ausser einem homogenen Trägermaterial weitere Bestandteile enthalten, zum Beispiel Vitamine, Mineralien, Strukturbildner, diätische oder nicht-diätische Fasern, Fruchtbestandteile, Gemüsebestandteile, Nussbestandteile, Fruchtkernbestandteile, Fleischbestandteile, Fischbestandteile, Krustentierbestandteile, Kakaoteilchen, Kakaobestandteile, Milch, Milchbestandteile, Fruchtsaft oder Fruchtpüree, Gemüsesaft oder Gemüsepüree, Kaffeeextrakt oder Kaffeearoma, Teeextrakt oder Teearoma, Kakaoextrakt oder Kakaoaroma, Farbstoff, Farbstoffextrakt, synthetische Süssstoffe, Gewürze, künstliche und/oder naturidentische Aromen, pharmazeutisch wirksame Stoffe, und andere ernährungsphysiologisch bedeutsame Stoffe.

Die Giessmasse wird zum Beispiel mit einer Giessmaschine durch Ausgiessdüsen an einen Massezielort gegossen, zum Beispiel in Formen, auf eine Band oder auf ein Halbprodukt.

Die Giessmasse kann auch manuell in Kartonboxen abgefüllt werden, wobei Blockware als Halbfabrikat erzeugt wird, zum Beispiel Blöcke von 20kg.

Die Giessmasse kann auch zum Transport in Tanks gefüllt werden, zum Beispiel in einen LKW-Tank.

Erfindungsgemäss wird der Anteil von insbesondere sphärischen, Partikeln mit einem Matrixmaterial aus, insbesondere amorph verfestigtem, Biopolymer, insbesondere Zucker, am Feststoffanteil der Giessmasse erhöht und/oder es werden, insbesondere sphärische, Partikel mit einem Matrixmaterial aus, insbesondere amorph verfestigtem, Biopolymer, insbesondere Zucker, der Giessmasse zudosiert.

Unter sphärischen Partikeln werden in der vorliegenden Anmeldung Körper bezeichnet, von denen mehr als 70% der Oberfläche konvex gekrümmt ist, das heisst, weniger als 30% der Oberfläche ist aus ebenen Teilflächen gebildet.

Die sphärischen Partikel haben eine Sphärizität $\Psi$ von grösser als 0.5, bevorzugt grösser als 0.8, weiter bevorzugt grösser als 0.9. Unter Sphärizität $\Psi$ wird das Verhältnis der Oberfläche einer Kugel mit demselben Volumen wie der gegebene Partikel und der Oberfläche des Partikels verstanden:

$$\Psi = \frac{\pi^{\frac{1}{3}}(6V_P)^{\frac{2}{3}}}{A_p}$$

wobei $V_P$ das Partikelvolumen und $A_P$ die Partikeloberfläche bezeichnen. Hat der Partikel die Form einer Kugel, ergibt sich eine Sphärizität von 1.

Der amorphe Zustand sorgt dafür, dass an der Oberfläche der Partikel keine Kristallflächen mit Kanten vorliegen.

Unter einem Matrixmaterial wird in der vorliegenden Anmeldung eine Grundsubstanz verstanden, in welcher andere Bestandteile, bevorzugt vereinzelt und/oder portioniert und bevorzugt im Wesentlichen gleichmässig verteilt, eingebettet sein können.

Das Matrixmaterial kann einen Wassergehalt aufweisen, der derart gewählt ist, dass insbesondere die Glasumwandlungstemperatur des Matrixmaterials oberhalb der typischen oder beabsichtigten Lager-, Verzehr- und/oder Verarbeitungstemperatur liegt, insbesondere die Glasumwandlungstemperatur grösser gleich 20°C, bevorzugt grösser gleich 25°C, ist, und wobei der Wassergehalt des Matrixmaterials bevorzugt kleiner als 10 Gewichts-% (Gleichgewichtsfeuchte im Matrixmaterial bei 20°C und 1023 hPa) ist.

Mit der Glasumwandlungstemperatur ist die mittels der Dynamischen Differenzkalorimetrie (DSC) bestimmte Glasumwandlungstemperatur gemeint.

Bei dem Biopolymer kann es sich im Rahmen der vorliegenden Anmeldung beispielsweise um eine Stärke, um Proteine, um mikrokristalline Cellulose oder ein Polyglycerinester (PGE) handeln. Insbesondere handelt es sich bei dem Biopolymer um einen Zucker oder eine Zucker/Polysaccharid-Mischung, z.B. eine Mischung aus Zuckern mit Stärken, gegebenenfalls teilweise abgebauten Stärken, oder das Biopolymer enthält einen Zucker oder eine Zucker/Polysaccharid-Mischung.

Bevorzugt besteht das Biopolymer aus einem Zucker, weiter bevorzugt einem Zucker mit Dextroseäquivalent von grösser als 20, und/oder enthält mindestens einen Zucker aus der folgenden Gruppe: ein Zucker mit Dextroseäquivalent von grösser als 20, Saccharose oder Sucrose, Dextrose, Polydextrose, Maltodextrin, Mannose, Rhamnose, Maltose, Laktose, Fruktose, Polyfructose, Lactiolisomalt, Tagatose, Saccharin, Aspartam, Acesulfam, Cyclamat, Neohesperidin, Neotam, Sucralose, Steviosid, Thaumatin oder Zuckeralkohole, wie zum Beispiel Sorbit, Xylit, Mannit, Maltit, Erythrit oder Isomalt, und/oder Kombinationen davon.

In das Matrixmaterial der sphärischen Partikel können Feststoffteilchen und/oder Flüssigkeits- und/oder Gasvolumina eingebettet sein, zum Beispiel Bestandteile von Kakao, Milchbestandteile, Fett, Aromastoffe, eine nutritiv relevante Zusatzkomponente oder eine Kombination davon.

Insbesondere haben die, insbesondere sphärischen, Partikel einen Fettgehalt von maximal 90Gew.%, bevorzugt weniger als 70Gew.%, weiter bevorzugt weniger als 50Gew.%.

Bevorzugt hat die Giessmasse nach der Erhöhung des Anteils und/oder dem Zudosieren der, insbesondere sphärischen, Partikel einen Fettgehalt von kleiner als 70Gew.%, insbesondere kleiner als 60Gew.%, und einen Fettgehalt von grösser als 5Gew.%, insbesondere von grösser als 10Gew.%.

Dabei kann ein Teil der gemäss einer Rezeptur erforderlichen Bestandteile in Form von Partikeln oder in Form einer Suspension, in welcher die, insbesondere sphärischen, Partikel in einem Trägerfluid verteilt sind, zudosiert werden.

Alternativ können alle gemäss einer Rezeptur erforderlichen Bestandteile, zum Beispiel der gesamte notwendige Zucker, in Form von Partikeln oder in Form einer Suspension, in welcher die Partikel verteilt sind, zugegeben werden. Bei den Partikeln kann es sich um sphärische Partikel oder eine Mischung aus sphärischen und kantigen Partikeln handeln.

Mit einer Erhöhung des Anteils von, insbesondere sphärischen, Partikeln am gesamten Feststoffanteil und/oder mit einer Zugabe von, insbesondere sphärischen, Partikeln kann das Fliessverhalten der Giessmasse beeinflusst, insbesondere die Viskosität und/oder die Fliessgrenze der Giessmasse erniedrigt, werden, ohne dass zum Beispiel die Temperatur verändert werden muss.

Eine gute Fliessfähigkeit ist insbesondere stromabwärts des Massebehälters notwendig, wenn die Giessmasse zum Beispiel durch engere Kanäle der Dosierventile und Ausgiessdüsen einer Giessmaschine fliesst oder wenn sich die Giessmasse in einer Form zur der Herstellung dünnwandiger Hohlkörper verteilen soll. Zu diesem Zeitpunkt ist die Giessmasse bereits geeignet temperiert. Bei Schokoladenmassen liegen beispielweise schon die für die spätere Kristallisation günstigen $\beta_V$ und $\beta_{VI}$ Kristallkeime der Kakaobuttermasse vor, die nach dem Vergiessen zu der gewünschten Kristallbildung führen.

Ein Erwärmen oder eine zusätzliche Scherung würde die Masse zwar dünnflüssiger machen und die Viskosität erniedrigen, aber angesichts der bereits vorliegenden Kristalle wäre es ungünstig, die Masse unmittelbar vor dem Vergiessen noch einmal zu erwärmen oder einer intensiven Scherung zu unterziehen, wenn sich herausstellt, dass die Fliessfähigkeit zu gering ist. Mit einem Hinzufügen von, insbesondere sphärischen, Partikeln kann die Fliessfähigkeit ohne Erwärmen oder aufwendige mechanische Einwirkung erhöht werden.

Bevorzugt weisen mindestens 90% (bezogen auf das Volumen) der Partikel einen Durchmesser von unter 500pm auf, bevorzugt kleiner als 100 $\mu$m und noch weitergehend bevorzugt kleiner 80 $\mu$m. Es können auch Partikel verwendet werden, von denen mindestens 90% der Partikel einen Durchmesser von unter 50$\mu$m, bevorzugt unter 45pm aufweisen.

Bevorzugt haben mindestens 60% (bezogen auf das Volumen) der Partikel eine Durchmesser zwischen 2 $\mu$m und 40 um, insbesondere sind 80% des Volumens der Partikel grösser als 1$\mu$m.

Bevorzugt sind gemäss Partikelgrössenverteilung (volumenbasiert, $x_{90,3}$) die Durchmesser von 90% des Volumens aller Partikel kleiner als 40 $\mu$m und gemäss Partikelgrössenverteilung (volumenbasiert, $x_{10,3}$) von 90% des Volumens aller Partikel grösser als 1 $\mu$m.

Bevorzugt weist die Grössenverteilung der sphärischen Partikel ein Verteilungsbreite, beschrieben durch die Standardabweichung s = $(x_{90,3}-x_{10,3})/x_{50,3}$, von kleiner 20, bevorzugt kleiner 5 und weitergehend bevorzugt kleiner 3 auf.

Die Durchmesserangabe bezieht sich dabei auf eine mit Laserbeugungsspektroskopie, zum Beispiel mit einem Beckman Coulter LS13320 Gerät, ermittelte Partikelgrösse.

Die Partikel können in einer monomodalen, bimodalen oder multimodalen Verteilung vorliegen. Die jeweiligen Schwerpunkte der Verteilung werden je nach Giessmasse und gewünschtem Effekt gewählt.

Je nach den gewünschten Fliesseigenschaften der Giessmasse kann vor der Erhöhung des Partikelanteils und/oder vor dem Zudosieren die Art und/oder Grösse der Partikel gewählt werden.

Es können beispielsweise Partikel unterschiedlicher Grössen zudosiert werden, wobei die jeweiligen Anteile von Partikeln unterschiedlicher Grösse das gewünschte Fliessverhalten beeinflussen.

Alternativ oder zusätzlich können unterschiedliche Arten von Partikeln zudosiert werden, zum Beispiel sphärische und kantige Partikel. Das Verhältnis von sphärischen zu kantigen Partikeln kann das gewünschte Fliessverhalten beeinflussen.

Es kann zur Einstellung des Fliessverhaltens ein rezeptbedingter Anteil des Feststoffgehalts zudosiert werden, wobei das Fliessverhalten durch die Zusammensetzung des Feststoffanteils beeinflusst wird, zum Beispiel durch den Anteil von Partikeln, von denen mindestens 90Vol.% einen Durchmesser unter 500pm aufweisen und insbesondere 90Vol.% einen Durchmesser grösser $1\mu m$, am gesamten Feststoffanteils und/oder durch das Mengenverhältnis von sphärischen und kantigen Partikeln.

Die, insbesondere sphärischen, Partikel können als Schüttgut oder, verteilt in einem Trägerfluid, in einer Suspension zugeführt werden. Als Trägerfluid kann ein Material dienen, das der Giessmasse entspricht oder einen wesentlichen Bestandteil der Giessmasse bildet, zum Beispiel eine Fettmasse, wie Kakaobutter.

Die Zudosierung erfolgt insbesondere vor dem Vergiessen, sodass für das Vergiessen, also zum Führen der Giessmasse durch eine oder mehrere Ausgiessdüsen und gegebenenfalls durch ein oder mehrere Dosierventile, eine Masse mit optimierter Fliessfähigkeit zur Verfügung steht.

Das Zudosieren erfolgt zum Beispiel in einen Massebehälter, in eine Mischvorrichtung, in eine Conche oder zwischen Massebehälter und einer Ausgiessdüse oder in ein Dosierventil.

Vorteilhafterweise werden die hinzugefügten Partikel oder eine Partikel enthaltende Suspension mit der Giessmasse vermischt, sodass sich eine homogene Verteilung ergibt. Nach der Erhöhung des Anteils und/oder dem Zudosieren und vor einem weiteren Verarbeitungsschritt erfolgt eine Veränderung der Fliesseigenschaften der Giessmasse, insbesondere eine Verringerung der Viskosität und/oder Fliessgrenze.

Bevorzugt kann der Anteil der Partikel und/oder die Menge der zuzudosierenden Partikel während des Giessprozesses festgelegt werden, sodass die Fliesseigenschaften der Giessmasse während des Giessprozesses veränderbar sind.

Vorteilhafterweise werden die, insbesondere sphärischen, Partikel in einem Vorratsbehälter zur Verfügung gestellt, in dem die Temperatur und/oder die Umgebungsfeuchtigkeit so eingestellt sind, dass die amorphen Partikel nicht nachkristallisieren und/oder nicht agglomerieren.

Herkömmlicher Giessmasse ist zumeist ein Emulgator zum Begünstigen der Fliesseigenschaften zugesetzt. Wird der Anteil der, insbesondere sphärischen, Partikeln am Feststoffanteils der Giessmasse erhöht und/oder werden der Giessmasse, insbesondere sphärische, Partikel hinzugefügt, kann auf einen Emulgator verzichtet werden, die Emulgatormenge kann verringert werden und/oder die Menge von, insbesondere sphärischen, Partikeln und Emulgator werden aufeinander abgestimmt, insbesondere wenn durch das Hinzufügen der, insbesondere sphärischen, Partikel die Rezeptur der Giessmasse beeinflusst wird, wenn beispielsweise Geschmacksstoffe in das Matrixmaterial der Partikel eingelagert sind.

Bevorzugt weist die Giessmasse einen Emulgatoranteil auf, der kleiner als 1 Gew.%, bevorzugt kleiner als 0.55 Gew.%, ist.

Bevorzugt ist dem Schritt des Zudosierens und dem dadurch erfolgenden Schritt der Beeinflussung der Fliesseigenschaften mindestens ein Verarbeitungsschritt der Giessmasse nachgeschaltet, insbesondere ein Schritt, bei dem die Giessmasse in eine dem Endprodukt angepasste Form überführt wird, zum Beispiel durch Vergiessen, Extrudieren, Versprühen, Schleudern oder Pressen.

In einer vorteilhaften Weiterbildung des Verfahrens wird ein Messwert ermittelt, der Rückschluss auf das Fliessverhalten der Giessmasse erlaubt, insbesondere auf die Viskosität. Der Messwert wird insbesondere nach dem Erhöhen des Partikelanteils und/oder dem Zudosieren der Partikel ermittelt, sodass der Effekt des erhöhten Partikelanteils und/oder der zudosierten Partikel auf die Fliesseigenschaft der Giessmasse beobachtet werden kann.

Es können zum Beispiel Messwerte mit einem online-Rheometer erfasst werden oder es kann die Leistung oder der Strom ermittelt werden, die notwendig sind, um ein Rührelement zum Rühren der Giessmasse zu betreiben.

Je nach Messwert kann ein notweniger Anteil von Partikeln am Feststoffanteil und/oder eine bestimmte zu zudosierende Menge aus einer hinterlegten Tabelle ermittelt werden, zum Beispiel mittels einer Kontroll- und/oder Regeleinheit.

Um sehr präzise eine Fliessfähigkeit von einer bestimmten gewünschten Qualität zu erhalten, kann ein Vergleich eines ermittelten Messwerts mit einem Sollwert vorgenommen werden.

Erfindungsgemäss erfolgt eine Eingabe oder Einstellung des Sollwerts in einer Kontroll- und/oder Regeleinheit.

Vorteilhafterweise wird der notwendige Anteil der Partikel am Feststoffanteil der Giessmasse und/oder die Menge der zuzudosierten Partikel in Abhängigkeit von einer Abweichung vom dem Sollwert bestimmt, bevorzugt in einer Kontroll- und/oder Regeleinheit.

Die Partikel können nach dem Zudosieren einen Anteil von grösser als 5 Gew.% und kleiner als 100 Gew.% des Feststoffanteils, zum Beispiel des Zuckeranteils oder der Summe aus Zucker-, Milch- und Kakaoanteilen, der Giessmasse bilden.

Dabei können die, insbesondere sphärischen, Partikel einen Teil des gemäss Rezeptur gewünschten Zuckers oder im Grenzfall den gesamten Zucker gemäss Rezeptur ersetzen oder den gemäss Rezeptur vorliegenden Zucker ergänzen. Mit den, insbesondere sphärischen, Partikeln können ausserdem Geschmacksstoffe in die Giessmasse eingetragen werden, wenn beispielsweise Aromastoffe oder Kakaobestandteile in dem Matrixmaterial der Partikel eingebettet sind.

Mit den, insbesondere sphärischen, Partikeln kann somit der Giessmasse auch ein Teil der gemäss Rezeptur gewünschten Bestandteile, zum Beispiel der Milch- und/oder Kakaobestandteile, hinzugefügt werden.

Es können der Giessmasse eine Menge Partikel hinzugefügt werden, die allesamt sphärisch sind.

Alternativ kann der Lebensmittelmasse eine Mischung von sphärischen und kantigen Partikeln hinzugefügt werden, wobei der Anteil der sphärischen Partikeln einstellbar ist. Die Partikel können als Schüttgut eindosiert werden, oder die Partikel werden als Suspension eindosiert, wobei die Partikel in einer Lebensmittelmasse verteilt sind, bevorzugt hochdosiert. Nach der Eindosierung kann sich in der Giessmasse ein Anteil von sphärischen Partikeln ergeben, der zu einer gewünschten Fliessfähigkeit führt, wobei gleichzeitig ein gewünschter Feststoffanteil oder eine vorbestimmte Rezeptur erreicht werden kann.

Es kann beispielsweise eine Basislebensmittelmasse hergestellt werden, in welcher wenig oder gar kein Feststoffanteil, zum Beispiel Zucker, enthalten ist. Je nachdem, welche Viskosität für die weitere Verarbeitung gewünscht ist, kann dann eine rezeptabhängige Menge mit entsprechenden Anteilen aus kantigen und sphärischen Feststoffpartikeln, zum Beispiel Zuckerpartikeln, zugegeben werden. Die Zugabe kann in Form von Schüttgut oder als Dispersion erfolgen. Je nach Anteil der sphärischen Partikel kann die Viskosität um bis zu einem Faktor von 5 variiert werden. Die jeweiligen Mengen können in einer Kontroll- und/oder Regeleinheit festgelegt werden.

Kantige Partikel ergeben sich bei der konventionellen Herstellung und Verarbeitung von Lebensmittelmassen, beispielsweise in einer Mühle oder einem Walzwerk.

Es können beispielweise zunächst sphärische Partikel zur Verfügung gestellt werden, die, insbesondere amorphen, Zucker enthalten und bevorzugt Milchbestandteile. In einem Matrixmaterial aus Zucker und/oder Milchbestandteilen können Einbettungen vorliegen, zum Beispiel Kakaobestandteile, Aromen und/oder Füllstoffe.

Bei den Füllstoffen kann es sich um mikrokristalline Zellulose handeln. Die Füllstoffe können als verkapselte Teilchen vorliegen, die Durchmesser zwischen 1 und 30 $\mu$m haben können. Mit den Füllstoffen kann Fett ersetzt werden, wobei die Füllstoffe zu einer geeigneten Konsistenz der Schokolade und nicht zum Kalorienengehalt betragen. Ein etwaiges sandiges Gefühl im Mund wird durch die Einbettung in Zucker verringert.

Andererseits kann eine Basislebensmittelmasse, zum Beispiel auf Fettbasis, zur Verfügung gestellt werden. Diese kann aus reiner Kakaobutter bestehen, zusätzlich Emulgatoren und/oder Aromen enthalten.

Der Kakaobutter kann Kakaomasse hinzugefügt werden, mit einem Anteil, der dadurch bestimmt ist, ob eine weisse, helle oder dunkle Schokolade gewünscht ist.

Zusätzlich kann bereits konventioneller Zucker, zum Beispiel als Sirup oder in kristalliner Form, zugegeben sein.

Zur Verfügungstellung der Basislebensmittelmasse werden die Kakaobutter und die weiteren Bestandteile bevorzugt gemischt, gemahlen und/oder conchiert, damit sich die gewünschten Aromen ausbilden.

Gemäss einer vorgegeben gewünschten Viskosität oder gemäss einer vorgegeben gewünschten Viskosität und einer vorgegebenen Rezeptur werden nun sphärischen Partikel zu der Basislebensmittelmasse dosiert. Die sphärischen Partikel können entweder als Schüttgut oder als Suspension, zum Beispiel in einer Kakaobutter zugegeben werden.

Die Bestimmung der jeweiligen Anteile erfolgt durch eine Kontroll- und/oder Regeleinheit und das Zudosieren durch eine Zuführeinrichtung.

Die erhaltene Giessmasse kann vor dem Vergiessen gegebenenfalls nochmals conchiert werden. Die Giessmasse kann anschliessend geeignet temperiert werden, eventuell mit Impfkristallen für die spätere Kristallisationen versehen werden und in eine dem Endprodukt angepasste Form gebracht werden, insbesondere vergossen, extrudiert, geschleudert oder versprüht werden.

Es können zu einem späteren Zeitpunkt, aber vor der Verfestigung des Endprodukts nochmals Partikel zugegeben werden, falls die Fliesseigenschaften nochmals angepasst werden sollen.

Die Partikel können in einer Vorrichtung und/oder mit einem Verfahren zur Herstellung von Partikeln mit kontrollierter Temperierung, insbesondere Kühlung, zur Verfügung gestellt werden.

Zur Herstellung der Partikel wird eine biopolymerhaltige, insbesondere zuckerhaltige, Flüssigkeit vereinzelt, insbesondere in einen Sprühraum der Vorrichtung versprüht.

Unter einer Vorrichtung zur Formgebung und Vereinzelung wird eine, insbesondere heizbare, Vorrichtung zum Zerstäuben, bzw. Atomisieren, und insbesondere nachfolgendem Trocknen von Flüssigkeiten betrachtet.

Bei der Vorrichtung zur Formgebung und Vereinzelung handelt es sich zum Beispiel um eine Vorrichtung zur Tropfenbildung mit Kapillaren oder zur Lammellen-Desintegrierung. Bevorzugt handelt es sich um eine Vorrichtung zur Sprühtrocknung, in welcher eine wässrigen Mischung oder Dispersion mittels mindestens eines Zerstäubers, zum Beispiel einer Sprühdüse, in eine Kammer gesprüht werden. Unter Temperatur- und Druckkontrolle ist im Sprühstrahl die Ausbildung kleiner, bevorzugt runder, Sprühteilchen sowie danach deren Verfestigung durch Trocknung bewirkbar.

Zum Vereinzeln kann auch Ultraschall, eine Scheibe oder eine Oszillationsdüse verendet werden. Beim Ultraschall-Atomisieren werden mechanische Schwingungen, die zum Beispiel durch piezokeramische Elemente erzeugt werden, auf einen Flüssigkeitsfilm übertragen.

Beim Rotationszerstäuber werden von einem schnell rotierenden Applikationskörper, z. B. einem Glockenteller oder einer Scheibe, aufgrund der Zentrifugalkraft Tröpfchen abgegeben.

Eine Lösung wird bevorzugt mittels eines Heissluftstroms, dessen Volumenstrom zum Beispiel 0.102 m$^3$/s beträgt, bei einem Fluidvolumenstrom von beispielsweise 0.96 l/h in einem Sprühtrockner prozessiert.

Bevorzugt wird dazu Trocknungsluft verwendet, deren Temperatur bei Eintritt in den Sprühturm zwischen 100 und 190°C, weiter bevorzugt zwischen 150 und 190°C beträgt.

In der Mitte des Sprühturmes kann die Temperatur der Luft ca. 115-130°C und beim Ausströmen aus dem Sprühtrockner (Vermischung mit Frischluft von 20°C) noch etwa 70-85°C betragen.

Die Partikel werden zum Beispiel auf eine Endtemperatur, insbesondere Raumtemperatur, abgekühlt. Dabei wird der Partikelstrom derart geführt, dass im Wesentlichen keine Agglomerate, also keine, wenige und/oder nur kleine Agglomerate, gebildet werden.

Unter kleinen Agglomeraten werden Agglomerate aus weniger als 50, bevorzugt weniger als 20, sphärischen Partikeln verstanden.

Die Partikel werden während des Abkühlens in Bewegung gehalten, wobei die Partikeldichte in der Umgebung der Partikel während des Abkühlens nicht auf Schüttgutdichte erniedrigt wird, die Partikel also nicht schon während des Abkühlprozesses aufgesammelt werden.

In dem Kühlbereich werden die gesprühten Partikel so geführt, dass sie sich im Wesentlichen nicht gegenseitig berühren und auch nicht auf Vorrichtungsflächen liegen bleiben, bevor sie die Endtemperatur aufweisen. Die Partikel schwimmen, fliegen oder fallen während des Abkühlens.

Unter der Endtemperatur wird die Temperatur verstanden, auf welche die Temperatur der Partikel nach dem Formgebungs- und Vereinzelungsprozess, zum Beispiel der Sprühtrocknung, asymptotisch zuläuft und/oder welche die Partikel aufweisen, wenn sie für eine Weiterverarbeitung oder Lagerung aus dem Sprühraum oder einem Sammelbehälter entnommen werden. Bevorzugt entspricht die Endtemperatur der Temperatur der Umgebung, also Raumtemperatur, bevorzugt 18°C-25°C, weiter bevorzugt 20°C-25°C.

Bevorzugt wird die Partikeldichte in der Umgebung der Partikel unterhalb der Dichte gehalten, welche die Partikel in einer Wirbelschicht nach Erreichen der Lockerungs- oder Minimalfluidisierungsgeschwindigkeit aufweisen, also der Gasgeschwindigkeit, bei der eine Schüttschicht oder ein Festbett in eine Wirbelschicht übergeht. Typischerweise ist die Partikeldichte dann etwa zwei- bis dreimal so gross wie die Schüttgutdichte, bevor die Minimalfluidisierungsgeschwindigkeit erreicht ist.

Eine grössere Schüttgutdichte in der Umgebung der Partikel wird bevorzugt erst erlaubt, wenn die Partikel auf eine Temperatur unter 67°C abgekühlt sind.

Ein Aufsammeln der Partikel erfolgt erst, wenn die Partikel die Endtemperatur erreicht oder unterschritten haben. Das Aufsammeln kann in einem Behälter oder auf einem Wirbelbett erfolgen.

Alternativ kann die Abkühlung in einer Flüssigkeit erfolgen, in welcher die Partikel verbleiben. Die Partikel können für eine spätere Verwendung wieder aus der Flüssigkeit entnommen werden, zum Beispiel indem das Fluid und die Partikel über ein, bevorzugt temperierbares Sieb, geführt werden.

Die Partikel können auch durch Zentrifugieren oder Sedimentation abgetrennt werden.

Die Partikel können an einem, bevorzugt temperierbaren, Sieb oder Filter gesammelt werden, von dem sie später mit einem Druckstoss wieder entfernt werden. Kleinstpartikel können so abgetrennt werden.

Bevorzugt wird der Partikelstrom durch einen Kühlbereich geführt, in dem die Partikel abkühlen, ohne dass sich zu viele Partikel berühren und aneinander haften.

Der Kühlbereich kann ein Kühlrohr umfassen. Das Kühlrohr kann aktiv temperiert sein, zum Beispiel kann der Kühlbereich mit einem Temperierfluid beaufschlagt werden oder ein Temperierfluid kann durch die Wand des Kühlrohrs geführt werden.

Für die Abkühlung der Partikel kann dem Partikelstrom während der Abkühlung ein Temperierfluid, zum Beispiel Temperierluft, hinzugefügt werden. Die Temperierluft kann bezüglich des Partikelstroms und/oder bezüglich des Trockenluftstroms im Gleich- oder Gegenstrom geführt werden. Die Temperierluft kann auch in einer Querströmung geführt werden.

Die Temperierluft kann als Druckluft hinzugefügt werden. Die Temperierluft kann zur Partikelstromführung eingesetzt werden.

Als Temperierluft kann die Luft verwendet werden, die zuvor zum Zerstäuben verwendet wurde.

Die Endtemperatur und/oder die Abkühlrate der Partikel können beeinflusst werden.

Die Beeinflussung kann über einen Einstellprozess erfolgen. Der Benutzer kann zum Beispiel einen Sollwert vorgeben, zum Beispiel für die Endtemperatur der Partikel, die Temperatur der Temperierluft oder die Temperatur der Wand des Kühlbereichs oder des Temperierfluids.

Der Benutzer nimmt dazu eine Auswahl und/oder Eingabe des Sollwerts vor. Eine Änderung der Vorgabe kann im laufenden Sprühprozess vorgenommen werden.

Bevorzugt kann die Temperatur und/oder der Zustrom der Temperierluft beeinflusst werden. Die Beeinflussung kann über einen Einstellprozess oder automatisiert erfolgen.

Alternativ oder zusätzlich kann die Verweilzeit der Partikel im Kühlbereich beeinflusst werden.

Um die Verweilzeit im Kühlbereich zu verlängern, können die Partikel einem Gegenstrom ausgesetzt werden, entsprechend kann die Verweilzeit durch einen Gleichstrom verkürzt werden.

Die Verweilzeit kann mit der Flussrate von Kühlluft beeinflusst werden.

Alternativ oder zusätzlich können die Partikel mittels einer Querströmung aus dem Kühlbereich herausgetrieben werden.

Die Verweilzeit im Kühlbereich kann über eine Anpassung der Kühlrohrlänge eingestellt werden. Je länger das Kühlrohr ist, desto länger kann die Flug- oder Fallzeit in Kühlbereich sein und desto besser können sich die Partikel der Endtemperatur annähern. Die Länge des Kühlrohrs kann verstellbar sein.

Bevorzugt findet ein Trocknen im Gleich- oder Gegenstrom statt. Insbesondere wird eine Einstellung der Temperatur und/oder Menge des Gegenstroms oder Gleichstroms vorgenommen. Alternativ oder zusätzlich kann ein Trocknen mit Mikrowellen stattfinden. Dazu wird insbesondere die Mikrowellenleistung und/oder die Dauer der Mikrowelleneintragung festgelegt. Mit einer Mikrowellentrocknung kann gleichzeitig eine Inaktivierung von Mikroorgansimen erreicht werden.

Ausserdem kann eine Trocknung bewirkt werden, indem die Partikel einem Unterdruck ausgesetzt werden, also der Druck in der Umgebung der Partikel gegenüber dem Normaldruck herabgesetzt wird.

Bevorzugt wird der Trocknungsgrad über eine Benutzereingabe festgelegt.

Die Partikel mit einem Matrixmaterial aus Zucker, insbesondere mit einem DE grösser 20, haben dann eine amorphe Struktur und neigen bei Raumtemperatur nicht Kristallisieren und zum Agglomerieren.

Insbesondere werden der Trocknung und die Abkühlung aufeinander abgestimmt.

Je trockener die Partikel sind, also je geringer der Wassergehalt der Partikel ist, desto weniger neigen Sie zu Agglomeratbildung, desto weniger stark müssen sie abgekühlt werden, bevor sie sich berühren dürfen. Je tiefer der Wassergehalt in der Zuckermatrix, desto höher ist die Glasumwandlungstemperatur ($T_g$). Unterhalb der $T_g$ sind die Partikel glasartig und entsprechend weniger klebrig als oberhalb der $T_g$.

Die der Erfindung zugrunde liegende Aufgabe wird ausserdem gelöst durch eine Vorrichtung zur Herstellung und/oder Verarbeitung von Lebensmittelprodukten mit einer Giessmaschine.

Die Vorrichtung kann des Weiteren einen Massebehälter für Giessmasse, eine Conche und/oder eine Mischvorrichtung umfassen.

Die Vorrichtung weist eine Zuführeinrichtung zum Eindosieren von einer Suspension mit, insbesondere sphärischen, Partikeln mit einem Matrixmaterial aus Biopolymer, insbesondere aus amorphem Zucker oder zum Eindosieren von, insbesondere sphärischen, Partikeln mit einem Matrixmaterial aus Biopolymer, insbesondere aus amorphem Zucker, auf.

Die Zuführeinrichtung kann eine Einmischvorrichtung umfassen, die dazu geeignet ist, die insbesondere sphärischen, Partikel als Schüttgut oder, verteilt in einem Trägerfluid, als Suspension zuzuführen und gleichmässig in der Giessmasse zu verteilen.

Die Partikel umfassen insbesondere amorph verfestigtes Biopolymer, aber es können auch sphärische Partikel mit kristallinem, teilkristallinem oder nachkristallisiertem Biopolymer verwendet werden. Es kann sich bei den sphärischen Partikeln auch um Agglomerate aus kleineren Teilchen, zum Beispiel Nanopartikeln, handeln.

Die Giessmaschine umfasst insbesondere eine Verarbeitungseinheit, die der Zuführeinrichtung nachgeschaltet ist, beispielweise eine Formgebungseinheit, insbesondere eine oder mehrere Ausgiessdüsen, eine Schleudereinheit, eine Extrusionseinheit oder eine Sprüheinheit.

Die Zuführeinrichtung ist insbesondere stromaufwärts bezüglich einer Ausgiessdüse angeordnet, weiter insbesondere in dem Massebehälter, an einer Mischvorrichtung zum Einmischen der Partikel in die Giessmasse, zum Beispiel einem Statischen Mischer, an einer Conche oder zwischen Massebehälter und einer Ausgiessdüse.

Die Zuführeinrichtung ist bevorzugt zum Dosieren einer bestimmten Quantität von sphärischen Partikeln geeignet. Sie erlaubt insbesondere das Festlegen der Menge von zuzuführenden Partikeln in einem Schüttgut oder in einer Suspension.

Die Zuführeinrichtung kann dazu mit einer Schliessvorrichtung, zum Beispiel einem Schieber oder einem Ventil, und/oder einer Vorrichtung zur Volumenerfassung, Gewichtserfassung und/oder zur Erfassung einer Durchströmzeit ausgestattet sein.

Die Zuführeinrichtung kann eine Antriebs- oder Fördervorrichtung, zum Beispiel ein Band, eine Schnecke, eine Pumpe und/oder eine pneumatische Fördereinrichtung, umfassen.

In der Zuführeinrichtung sind vorteilhafterweise die Temperatur, der Druck und/oder die Umgebungsfeuchte definierbar, so dass die sphärischen Partikeln nicht agglomerieren.

Die Vorrichtung umfasst ausserdem bevorzugt einen Vorratsbehälter zum Lagern von sphärischen Partikeln mit einem Matrixmaterial aus, insbesondere amorph verfestigtem, Biopolymer, insbesondere Zucker und/oder Milchbestandteile enthaltend. In dem Vorratsbehälter sind vorteilhafterweise die Temperatur, der Druck und/oder die Umgebungsfeuchte definierbar, so dass die sphärischen Partikeln nicht agglomerieren.

Der Vorratsbehälter kann ein Rührwerk umfassen.

Es kann sich um einen Vorratsbehälter für Schüttgut oder für ein Fluid handeln.

Der Vorratsbehälter steht bevorzugt mit der Zuführeinrichtung in einer Fluidverbindung oder ist mit der Zuführeinrichtung in eine Fluidverbindung bringbar.

Die Vorrichtung kann eine Mischvorrichtung zum Einmischen der sphärischen Partikel in die Giessmasse aufweisen. Die Mischvorrichtung stellt sicher, dass sich die Partikel in der Giessmassse möglichst homogen verteilen. Es kann beispielweise in einer gesonderten Mischvorrichtung, in einem Massebehälter, in einer Masseleitung und/oder in der Giessmaschine ein Rührorgan vorgesehen sein.

Alternativ oder zusätzlich kann die Zuführeinrichtung so ausgestaltet sein, dass die Partikel in kleinen Portionen einer vorbeifliessenden Giessmasse zudosierbar sind.

In einer vorteilhaften Ausführung der erfindungsgemässen Vorrichtung umfasst die Vorrichtung, insbesondere die Giessmaschine, eine Messvorrichtung zur Bestimmung einer Grösse, die Rückschluss auf das Fliessverhalten der Giessmasse erlaubt.

Insbesondere kann ein Rückschluss auf die Viskosität und /der die Fliessgrenze gezogen werden. Es kann beispielsweise der Strömungswiderstand gemessen werden.

Als Messvorrichtung kann beispielsweise ein kommerziell verfügbares Online Rheometer verwendet werden, zum Beispiel ein Rotationsviskosimeter, wie das Brookfield TT-100 der Firma Brookfield, oder ein Vibrationsviskosimeter, wie das Hydramotion XL7/151 oder das ViscoMelt500 der Firma Hydramotion.

Es kann beispielsweise auch die Motorleistung oder der Motorstrom zur Betätigung eines Rührelements in einem Massebehälter, in der Mischvorrichtung und/oder in der Giessmaschine ermittelt werden.

Während der Verflüssigung der Milchschokoladenmasse fällt in einem 6t Mischer typischerweise zu Beginn bei 1000 Umdrehungen pro Minute einen Motorenstrom von 100 A an, wobei schlussendlich bei 2400 Umdrehungen pro Minute 280 A anfallen.

Die Messvorrichtung ist insbesondere der Zuführeinrichtung nachgeschaltet, so dass der Effekt des erhöhten anteils und/oder der zugeführten Partikel beobachtet werden kann.

Erfindungsgemäss weist die Vorrichtung eine Kontroll- und/oder Regeleinheit zur Einstellung des Anteils der Partikel und/oder der zuzudosierenden Menge an Partikeln auf. Die Kontroll- und/oder Regeleinheit ist insbesondere so ausgebildet, dass das Fliessverhalten der Giessmasse gezielt beeinflusst wird, wobei bevorzugt gleichzeitig die Rezeptur berücksichtigt wird.

Eine geeignete Menge von zuzudosierenden Partikeln, zum Beispiel zum Beispiel eine Anzahl von Partikeln, ein Gewicht oder ein Volumen von Schüttgut oder Suspension, kann mittels der Kontroll- und/oder Regeleinheit bestimmt werden, indem ein entsprechender Wert in Abhängigkeit von der Art und Menge der zu behandelnden Giessmasse einer hinterlegten Tabelle entnommen wird.

Die Beeinflussung kann über einen Einstellprozess erfolgen. Der Benutzer kann zum Beispiel über die Kontroll-und/oder Regeleinheit einen Sollwert für eine Rezeptur, eine Partikelkonzentration und/oder einen Sollwert für die Fliessfähigkeit vorgeben.

Das Mengenverhältnis von sphärischen zu kantigen Partikeln wird je nach Sollwert einer hinterlegten Tabelle entnommen.

Es kann dann eine geeignete Menge und/oder die geeignete Verteilung von Partikeln zudosiert werden. Der Wert für die zuzudosierenden Menge, zum Beispiel für eine Anzahl von Partikeln, ein Gewicht oder ein Volumen von Schüttgut oder Suspension, und/oder die Grössenverteilung der Partikel

Es werden solange Partikel zudosiert, bis der mit einer Messung ermittelte Wert für das Fliessverhalten einem vorgegebenen Sollwert entspricht, unter Berücksichtigung einer vorgegeben Rezeptur. Der Abgleich und die Steuerung der Dosierung kann über die die Kontroll- und/oder Regeleinheit vorgenommen werden.

Sphärischen Partikeln mit einem Matrixmaterial aus, insbesondere amorph verfestigtem, Biopolymer, insbesondere Zucker, können zur Einstellung und/oder Änderung der Fliesseigenschaften, insbesondere der Viskosität, einer fliessfähigen Lebensmittelmasse, während des Herstellungs- und/oder Verarbeitungsprozesses eines Lebensmittelprodukts verwendet werden.

Insbesondere weisen mindestens 90% der Partikel einen Durchmesser von unter 500pm, bevorzugt unter 100um, weiter bevorzugt unter 80pm auf. Es können auch Partikel verwendet werden, von denen mindestens 90% der Partikel einen Durchmesser von unter 50pm, bevorzugt unter 45pm aufweisen.

Bei der Lebensmittelmasse handelt es sich insbesondere um eine Fettmasse, weiter insbesondere einer Compound- und/oder Schokoladenmasse.

Die Verwendung erfolgt bevorzugt in einer Giessmaschine.

Die Erfindung wird nachfolgend in Ausführungsbeispielen anhand von Zeichnungen erläutert.

Es zeigen

Figur 1     eine schematische Darstellung eines Ablaufs des erfindungsgemässen Verfahrens;

Figur 2     eine schematische Darstellung eines Beispiels für die Bereitstellung von sphärischen Partikeln.

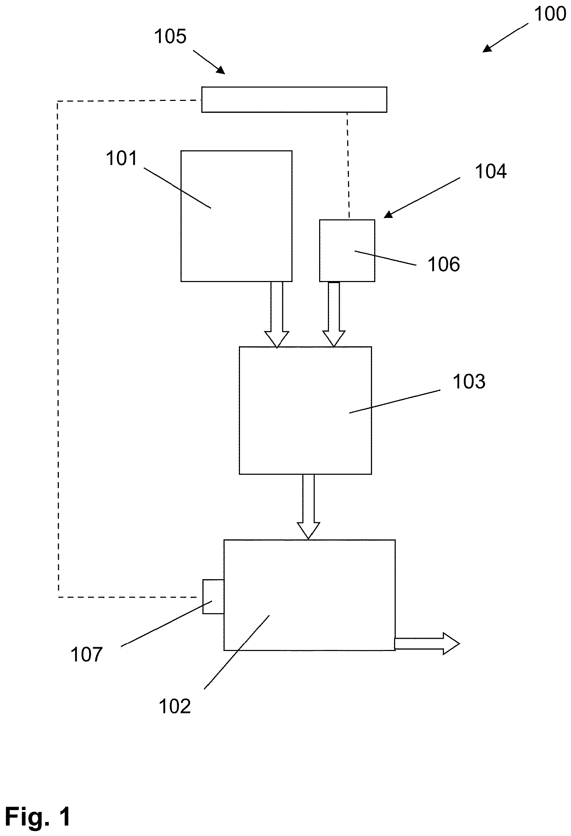

Figur 1 zeigt eine schematische Darstellung eines Beispiels für ein erfindungsgemässes Verfahren zur Herstellung und/oder Verarbeitung von Lebensmittelprodukten. Eine Vorrichtung 100 zur Herstellung und/oder Verarbeitung von Lebensmittelprodukten umfasst eine Giessmaschine 102 und einen Massebehälter 101 für eine Giessmasse auf Fettbasis. Der Massebehälter 101 kann doppelwandig ausgeführt sein, sodass die Giessmasse temperierbar ist.

Die Giessmasse gelangt beispielsweise über nicht dargestellte Dosierventile zu ebenfalls nicht explizit dargestellten Ausgiessdüsen, und fliesst von dort zum Beispiel in Formen, in denen sie erstarrt.

Die Vorrichtung 100 verfügt über Zuführeinrichtung 104 zum Eindosieren von sphärischen Partikeln mit einem Matrixmaterial aus Biopolymer. Eine Kontroll- und/oder Regeleinheit 105 legt fest, welche und wieviele Partikel eindosiert werden.

Die Zuführeinrichtung 104 umfasst einem Vorratsbehälter 106 zum Lagern der sphärischen Partikeln mit einer ersten grössenverteilung, in dem bevorzugt die Temperatur und/oder die Umgebungsfeuchte definierbar sind. Die Zuführeinrichtung kann über einen weiteren nicht explizit gezeigten Vorratsbehälter verfügen, in dem kantige Partikel oder eine Suspension mit kantigen Partikeln oder sphärische Partikel mit einer zweiten Grössenverteilung oder eine Suspension mit sphärischen Partikel mit einer zweiten Grössenverteilung vorliegen.

Die Partikel werden in eine Mischvorrichtung 103 dosiert, wo sie in eine Giessmasse eingemischt werden. Von der Mischvorrichtung 103 wird die Giessmasse in die Giessmaschine 102 überführt. Die Mischvorrichtung 103 kann auch in die Giessmaschine 102 integriert sein.

Die Vorrichtung 100 weist stromabwärts von der Zuführeinrichtung 104 eine Messvorrichtung 107 auf zur Bestimmung einer Grösse, die Rückschluss auf das Fliessverhalten der Giessmasse erlaubt. Im gezeigten Beispiel ist die Messvorrichtung 107 an der Giessmaschine 102 angebracht.

Die Messvorrichtung 107 kann an die Kontroll- und/oder Regeleinheit 105 gekoppelt sein, die dann je nach Abweichung des Messwerts von einem vorgegebenen Sollwert den jeweiligen Anteil und/oder die Dosierung der Partikel beeinflusst.

Auf diese Weise wird gewährleistet, dass die Giessmasse mit ausreichender Fliessfähigkeit durch die Kanäle der Dosierventile und der Ausgiessdüsen fliesst, so dass die Kanäle nicht verstopfen.

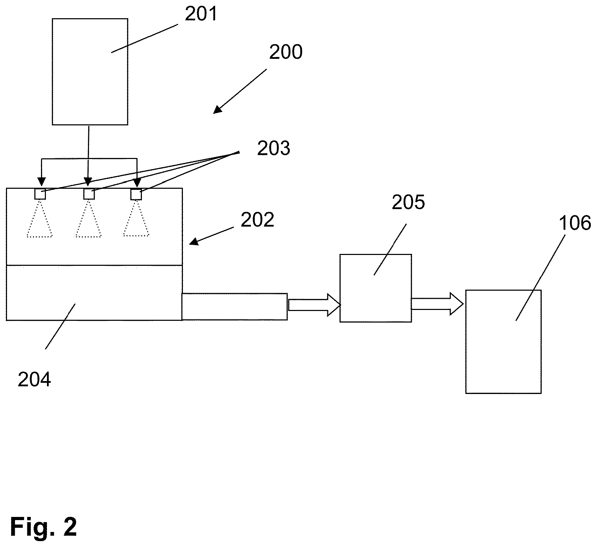

Figur 2 zeigt eine schematische Darstellung eines Beispiels für die Bereitstellung von sphärischen Partikeln. Die Partikel werden beispielsweise in einer Vorrichtung zur Formgebung und Vereinzelung 200 hergestellt, wobei der Partikelstrom bei einer Abkühlung auf Endtemperatur, insbesondere Raumtemperatur, derart geführt wird, dass im Wesentlichen keine Agglomerate gebildet werden.

Zunächst wird eine Lösung von einem Biopolymer, zum Beispiel Zucker, in einem Vormischer hergestellt. Dabei können dem Biopolymer weitere Ingredienzen zugefügt werde. Die Biopolymerlösung wird dann in einen Sprühtrockner 202 geleitet, wo die Lösung über Sprühdüsen 203 versprüht wird. Dabei bilden sich sphärische Partikel mit einem Matrixmaterial aus amorph verfestigtem Biopolymer. In dem Matrixmaterial können Einbettungen aus den weiteren Ingredienzen vorliegen.

Im gezeigten Beispiel erfolgt das Versprühen in ein Fluid 204, zum Beispiel ein kaltes Öl oder eine Kakaobutter. Die Partikel kühlen ab ohne zu agglomerieren.

Eine Suspension bestehend aus dem Fluid 204 und den Partikeln wird in eine Vorrichtung 205 zum Erhöhen der Partikelkonzentration geleitet. Dabei kann sich um eine Zentrifuge oder eine Vorrichtung zur Sedimentation handeln. In einem Vorratsbehälter 106 wird eine konzentrierte Suspension mit Partikeln erhalten, wobei zum Beispiel gemäss Partikelgrössenverteilung (volumenbasiert, $x_{90,3}$) die Durchmesser von 90% des Volumens aller Partikel kleiner als 80 $\mu$m und gemäss Partikelgrössenverteilung (volumenbasiert, $x_{10,3}$) die Durchmesser von 90% des Volumens aller Partikel grösser als 1 $\mu$m sind.

Die in der Suspension vorliegenden Partikel können der Giessmasse dann in flüssiger oder pastöser Form zudosiert werden.

Alternativ können die sprühgetrockneten Partikel nach ausreichender Abkühlung trocken gesammelt werden und der Giessmasse in Pulverform zudosiert werden.

**Patentansprüche**

1. Verfahren zur Herstellung und/oder Verarbeitung von Lebensmittelprodukten aus einer Giessmasse, insbesondere einem fettkontinuierlichen Fluid,

   wobei das Fliessverhalten der Giessmasse eingestellt und/oder verändert wird, indem der Giessmasse eine Mischung von sphärischen und kantigen Partikeln zugegeben wird und der Anteil der sphärischen Partikeln eingestellt wird, wobei

   - der Anteil von sphärischen Partikeln, von denen mindestens 90 Vol.% einen Durchmesser unter 500$\mu$m aufweisen und insbesondere 90 Vol.% einen Durchmesser grösser 1$\mu$m, am gesamten Feststoffanteil der Giessmasse erhöht wird; und/oder
   - sphärische Partikel, von denen mindestens 90 Vol.% einen Durchmesser unter 500$\mu$m aufweisen und insbesondere 90 Vol.% einen Durchmesser grösser 1$\mu$m, der Giessmasse in einer Vorrichtung (200) zur Herstellung und/oder Verarbeitung von Lebensmittelprodukten zudosiert werden, **dadurch gekennzeichnet, dass** ein Sollwert in einer Kontroll- und/oder Regeleinheit eingegeben oder eingestellt wird, sowie das Mengenverhältnis von sphärischen zu kantigen Partikeln je nach dem Sollwert für die Fliessfähigkeit einer hinterlegten Tabelle entnommen wird oder unter Berücksichtigung einer vorgegebenen Rezeptur solange sphärische Partikel zudosiert werden, bis ein mit einer Messung ermittelter Wert für das Fliessverhalten dem vorgegebenen Sollwert entspricht.

2. Verfahren gemäss Anspruch 1, wobei die Viskosität und/oder die Fliessgrenze erniedrigt werden.

3. Verfahren gemäss Anspruch 1 oder 2, wobei die sphärischen Partikel ein Matrixmaterial aus, insbesondere amorph verfestigtem, Biopolymer enthalten, insbesondere ein Matrixmaterial aus Zucker.

4. Verfahren gemäss einem der vorhergehenden Ansprüche, wobei ein Messwert, der Rückschluss auf das Fliessverhalten, insbesondere die Viskosität, der Giessmasse erlaubt, ermittelt wird, insbesondere nach dem Erhöhen des Anteils der sphärischen Partikel am Feststoffanteil und/oder nach dem Zudosieren der Partikel.

5. Verfahren gemäss Anspruch 5, wobei ein Vergleich des ermittelten Messwerts mit einem Sollwert vorgenommen wird.

6. Verfahren gemäss einem der vorhergehenden Ansprüche, wobei ein Zudosieren an einer Mischvorrichtung (103) zum Einmischen der Partikel in die Giessmasse, an einer Conche oder zwischen einem Massebehälter (101) und einer Ausgiessdüse der Giessmaschine (102) erfolgt.

7. Verfahren gemäss einem der vorhergehenden Ansprüche, wobei die Partikel nach dem Zudosieren einen Anteil von grösser als 5 Gew.% und kleiner als 100 Gew.% des Feststoffanteils der Giessmasse bilden.

8. Verfahren gemäss einem der vorhergehenden Ansprüche, wobei die Partikel in einer Vorrichtung zur Formgebung und Vereinzelung (200) hergestellt werden, wobei der Partikelstrom bei einer Abkühlung auf Endtemperatur, insbesondere Raumtemperatur, derart geführt wird, dass im Wesentlichen keine Agglomerate gebildet werden.

9. Vorrichtung zur Herstellung und/oder Verarbeitung von Lebensmittelprodukten mit einer Giessmaschine (102),
wobei

die Vorrichtung (100) eine Zuführeinrichtung (104) zum Eindosieren von, insbesondere sphärischen, Partikeln mit einem Matrixmaterial aus, insbesondere amorph verfestigtem, Biopolymer aufweist, wobei die Vorrichtung (100) eine Kontroll- und/oder Regeleinheit (105) zur Einstellung der zu zudosierenden Menge an Partikeln aufweist, insbesondere zur Beeinflussung des Fliessverhaltens,
**dadurch gekennzeichnet, dass**

(i) die Kontroll- und/oder Regeleinheit (105) dafür ausgelegt ist, einen Sollwert einzugeben oder einzustellen und das Mengenverhältnis von sphärischen zu kantigen Partikeln je nach Sollwert für die Fliessfähigkeit einer hinterlegten Tabelle zu entnehmen oder
(ii) die Vorrichtung (200) eine Messvorrichtung (107) aufweist zur Bestimmung einer Grösse, die Rückschluss auf das Fliessverhalten der Giessmasse, insbesondere auf die Viskosität, erlaubt, die Kontroll- und/oder Regeleinheit (105) dafür ausgelegt ist, einen Sollwert einzugeben oder einzustellen und die Menge von zuzudosierenden sphärische Partikel in Abhängigkeit von einer Abweichung von dem Sollwert zu bestimmen
oder
(iii) die Vorrichtung (200) eine Messvorrichtung (107) aufweist zur Bestimmung einer Grösse, die Rückschluss auf das Fliessverhalten der Giessmasse, insbesondere auf die Viskosität, erlaubt, und die Kontroll- und/oder Regeleinheit (105) dafür ausgelegt ist, einen Sollwert einzugeben oder einzustellen und unter Berücksichtigung einer vorgegeben Rezeptur solange Zudosierung von sphärischen Partikeln zu steuern, bis der mit einer Messung ermittelte Wert für das Fliessverhalten dem vorgegebenen Sollwert entspricht.

10. Vorrichtung nach Anspruch 9, wobei die Zuführeinrichtung (104) stromaufwärts bezüglich einer Ausgiessdüse der Giessmaschine (102) angeordnet ist, insbesondere an einem Massebehälter (101) für die Giessmasse, an einer Mischvorrichtung (103), an einer Conche oder zwischen einem Massebehälter (101) und einer Ausgiessdüse der Giessmaschine (102).

11. Vorrichtung nach Anspruch 9 oder 10, **dadurch gekennzeichnet, dass** die Vorrichtung (100) einen Vorratsbehälter (106) zum Lagern der, insbesondere sphärischen, Partikel aufweist, in dem bevorzugt die Temperatur und/oder die Umgebungsfeuchte definierbar sind, so dass die sphärischen Partikeln nicht agglomerieren.

12. Vorrichtung nach Anspruch 9, 10 oder 11, **dadurch gekennzeichnet, dass** die Vorrichtung (200) gemäss Variante (i) eine Messvorrichtung (107) aufweist zur Bestimmung einer Grösse, die Rückschluss auf das Fliessverhalten der Giessmasse, insbesondere auf die Viskosität, erlaubt, die insbesondere der Zuführeinrichtung (104) nachgeschaltet ist.

13. Vorrichtung nach Anspruch 9, 10 oder 11, **dadurch gekennzeichnet, dass** die Messvorrichtung (107) der Vorrichtung (100) gemäss Varianten (ii) und (iii) der Zuführeinrichtung (104) nachgeschaltet ist.

**Claims**

1. Process for the production and/or processing of food products from a pourable composition, in particular a fat-continuous fluid,

    wherein the flow behavior of the pourable composition is adjusted and/or altered by adding a mixture of spherical and angular particles is added to the pourable composition and the proportion of spherical particles is adjusted, wherein

        - the proportion of spherical particles, of which at least 90% by volume have a diameter below 500 $\mu$m and in particular 90% by volume have a diameter greater than 1 pm, in the total solids content of the pourable composition is increased;
        and/or
        - spherical particles, at least 90% by volume of which have a diameter of less than 500 $\mu$m and, in particular, 90% by volume of which have a diameter of greater than 1 pm, are metered into the pourable composition in an apparatus (200) for the production and/or processing of food products, **characterized in that**

    a setpoint value is entered or set in a control and/or regulating unit, and the quantity ratio of spherical to angular particles is taken from a stored table depending on the setpoint value for the flowability, or spherical particles are added taking into account a predetermined recipe until a value determined by measurement for the flow behavior corresponds to the predetermined setpoint value.

2. Process according to claim 1, wherein the viscosity and/or the yield point are reduced.

3. Process according to claim 1 or 2, wherein the spherical particles contain a matrix material of, in particular amorphously solidified, biopolymer, in particular a matrix material of sugar.

4. Process according to one of the preceding claims, wherein a measured value which allows conclusions to be drawn about the flow behavior, in particular the viscosity, of the pourable composition is determined, in particular after increasing the proportion of spherical particles in the solids content and/or after metering in the particles.

5. Process according to claim 5, wherein a comparison of the determined measured value with a set value is carried out.

6. Process according to one of the preceding claims, wherein metering takes place at a mixing device (103) for mixing the particles into the pourable composition, at a conche or between a composition container (101) and a pouring nozzle of the casting machine (102).

7. Process according to one of the preceding claims, wherein the particles form a proportion of greater than 5 wt.% and less than 100 wt.% of the solids content of the pourable composition after metering.

8. Process according to one of the preceding claims, wherein the particles are produced in an apparatus for shaping and separating (200), wherein the particle stream is guided during cooling to final temperature, in particular room temperature, in such a way that essentially no agglomerates are formed.

9. Device for the production and/or processing of food products with a casting machine (102), wherein

    the device (100) has a feeding device (104) for metering in, in particular spherical, particles with a matrix material of, in particular amorphously solidified, biopolymer, the device (100) having a control and/or regulating unit (105) for setting the quantity of particles to be metered in, in particular for influencing the flow behavior, **characterized in that**

        (i) the control and/or regulating unit (105) is designed to enter or set a setpoint value and to take the quantity ratio of spherical to angular particles depending on the setpoint value for the flowability from a stored table or
        (ii) the device (200) has a measuring device (107) for determining a quantity which allows conclusions to be drawn about the flow behavior of the pourable composition, in particular about the viscosity, the control and/or regulating unit (105) is designed to enter or set a setpoint value and to determine the quantity of spherical particles to be added as a function of a deviation from the setpoint value or

(iii) the device (200) has a measuring device (107) for determining a variable which allows conclusions to be drawn about the flow behavior of the pourable composition, in particular about the viscosity, and the control and/or regulating unit (105) is designed to enter or set a setpoint value and to control the metering of spherical particles, taking into account a predetermined recipe, until the value for the flow behavior determined by a measurement corresponds to the predetermined setpoint value.

10. Device according to claim 9, wherein the feeding device (104) is arranged upstream with respect to a pouring nozzle of the casting machine (102), in particular on a mass container (101) for the pourable composition, on a mixing device (103), on a conche or between a mass container (101) and a pouring nozzle of the casting machine (102).

11. Device according to claim 9 or 10, **characterized in that** the device (100) has a storage container (106) for storing the, in particular spherical, particles, in which preferably the temperature and/or the ambient humidity can be defined so that the spherical particles do not agglomerate.

12. Device according to claim 9, 10 or 11, **characterized in that** the device (200) according to variant (i) has a measuring device (107) for determining a quantity which allows conclusions to be drawn about the flow behavior of the pourable composition, in particular about the viscosity, which is connected in particular downstream of the feeding device (104).

13. Device according to claim 9, 10 or 11, **characterized in that** the measuring device (107) of the device (100) according to variants (ii) and (iii) is connected downstream of the feeding device (104).

**Revendications**

1. Procédé de fabrication et/ou de traitement de produits alimentaires à partir d'une masse de coulée, en particulier d'un fluide continu de graisse, dans lequel le comportement d'écoulement de la masse de coulée est ajusté et/ou modifié par le fait que on ajoute à la masse de coulée un mélange de particules sphériques et anguleuses et on règle la proportion de particules sphériques, où

    - la proportion de particules sphériques, dont au moins 90 % en volume présentent un diamètre inférieur à 500 $\mu$m et en particulier 90 % en volume un diamètre supérieur à 1 $\mu$m, est augmentée par rapport à la proportion totale de matières solides de la masse de coulée ; et/ou

    - des particules sphériques, dont au moins 90 % en volume présentent un diamètre inférieur à 500 $\mu$m et en particulier 90 % en volume un diamètre supérieur à 1 $\mu$m, sont ajoutées à la masse de coulée dans un dispositif (200) pour la fabrication et/ou le traitement de produits alimentaires, **caractérisé en ce que**

une valeur de consigne est introduite ou réglée dans une unité de contrôle et/ou de réglage, et le rapport quantitatif entre les particules sphériques et les particules anguleuses est prélevé d'une table de mesure mémorisée en fonction de la valeur de consigne pour la fluidité ou des particules sphériques sont ajoutées en tenant compte d'une recette prédéfinie jusqu'à ce qu'une valeur déterminée par une mesure pour le comportement d'écoulement corresponde à la valeur de consigne prédéfinie.

2. Procédé selon la revendication 1, dans lequel la viscosité et/ou la limite d'écoulement sont abaissées.

3. Procédé selon la revendication 1 ou 2, dans lequel les particules sphériques contiennent un matériau de matrice en biopolymère, en particulier à solidification amorphe, en particulier un matériau de matrice en sucre.

4. Procédé selon l'une des revendications précédentes, dans lequel on détermine une valeur de mesure qui permet de tirer des conclusions sur le comportement d'écoulement, en particulier la viscosité, de la masse de coulée, en particulier après l'augmentation de la proportion de particules sphériques par rapport à la proportion de matières solides et/ou après l'addition de particules.

5. Procédé selon la revendication 5, dans lequel on procède à une comparaison de la valeur mesurée déterminée avec une valeur de consigne.

6. Procédé selon l'une quelconque des revendications précédentes, dans lequel un dosage est effectué au niveau d'un dispositif de mélange (103) pour mélanger les particules dans la masse de coulée, au niveau d'une conche ou entre un réservoir de masse (101) et une buse de coulée de la machine de coulée (102).

7. Procédé selon l'une des revendications précédentes, dans lequel les particules constituent, après l'addition, une proportion supérieure à 5 % en poids et inférieure à 100 % en poids de la fraction solide de la masse de coulée.

8. Procédé selon l'une des revendications précédentes, dans lequel les particules sont fabriquées dans un dispositif de mise en forme et de séparation (200), le flux de particules étant guidé lors d'un refroidissement à la température finale, en particulier à la température ambiante, de telle sorte qu'il ne se forme essentiellement aucun agglomérat.

9. Dispositif de fabrication et/ou de traitement de produits alimentaires avec une machine de coulée (102),
dans lequel le dispositif (100) présente un dispositif d'alimentation (104) pour le dosage de particules, en particulier sphériques, avec un matériau de matrice en biopolymère, en particulier solidifié de manière amorphe, le dispositif (100) présentant une unité de contrôle et/ou de régulation (105) pour le réglage de la quantité de particules à doser, en particulier pour influencer le comportement d'écoulement, **caractérisé en ce que**

(i) l'unité de contrôle et/ou de régulation (105) est conçue pour introduire ou régler une valeur de consigne et pour prélever le rapport quantitatif entre les particules sphériques et les particules anguleuses, en fonction de la valeur de consigne pour la fluidité, dans un tableau déposé ou

(ii) le dispositif (200) présente un dispositif de mesure (107) pour déterminer une grandeur qui permet de tirer des conclusions sur le comportement d'écoulement de la masse de coulée, en particulier sur la viscosité, l'unité de contrôle et/ou de régulation (105) est conçue pour entrer ou régler une valeur de consigne et pour déterminer la quantité de particules sphériques à ajouter en fonction d'un écart par rapport à la valeur de consigne
ou

(iii) le dispositif (200) présente un dispositif de mesure (107) pour déterminer une grandeur qui permet de tirer des conclusions sur le comportement d'écoulement de la masse de coulée, en particulier sur la viscosité, et l'unité de contrôle et/ou de régulation (105) est conçue pour entrer ou régler une valeur de consigne et, en tenant compte d'une recette prédéfinie, pour commander l'addition de particules sphériques jusqu'à ce que la valeur déterminée par une mesure pour le comportement d'écoulement corresponde à la valeur de consigne prédéfinie.

10. Dispositif selon la revendication 9, dans lequel le dispositif d'alimentation (104) est disposé en amont par rapport à une buse de coulée de la machine de coulée (102), en particulier sur un réservoir de masse (101) pour la masse de coulée, sur un dispositif de mélange (103), sur une conche ou entre un réservoir de masse (101) et une buse de coulée de la machine de coulée (102).

11. Dispositif selon la revendication 9 ou 10, **caractérisé en ce que** le dispositif (100) présente un réservoir (106) pour le stockage des particules, notamment sphériques, dans lequel la température et/ou l'humidité ambiante peuvent être définies de préférence, de sorte que les particules sphériques ne s'agglomèrent pas.

12. Dispositif selon la revendication 9, 10 ou 11, **caractérisé en ce que** le dispositif (200) selon la variante (i) présente un dispositif de mesure (107) pour déterminer une grandeur qui permet de tirer des conclusions sur le comportement d'écoulement de la masse de coulée, en particulier sur la viscosité, qui est monté en particulier en aval du dispositif d'alimentation (104).

13. Dispositif selon la revendication 9, 10 ou 11, **caractérisé en ce que** le dispositif de mesure (107) du dispositif (100) selon les variantes (ii) et (iii) est monté en aval du dispositif d'alimentation (104).

**Fig. 1**

201

200

203

205

106

202

204

**Fig. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2015049292 A
- EP 1031285 A
- US 20100323067 A
- US 20060121164 A
- US 20160242432 A1
- US 4861615 A
- WO 2011007379 A1
- GB 1219996 A

### In der Beschreibung aufgeführte Nicht-Patentliteratur

- Zucker und Zuckerwaren. *Hoffmann/Mauch/Untze,* 2002, vol. 2, ISBN ISBN 3-86022-937-0, 234-235